(19) Europäisches Patentamt

European Patent Office

Office européen des brevets

(11) **EP 1 596 535 A1**

(12) **EUROPEAN PATENT APPLICATION**

(43) Date of publication:
**16.11.2005 Bulletin 2005/46**

(51) Int Cl.$^7$: **H04L 12/56**

(21) Application number: **04011420.9**

(22) Date of filing: **13.05.2004**

| (84) Designated Contracting States: | (71) Applicant: **SIEMENS AKTIENGESELLSCHAFT** |
|---|---|
| **AT BE BG CH CY CZ DE DK EE ES FI FR GB GR HU IE IT LI LU MC NL PL PT RO SE SI SK TR** Designated Extension States: **AL HR LT LV MK** | **80333 München (DE)** (72) Inventor: **Glikman, Louri** **10627 Berlin (DE)** |

(54) **Method for computing routing graphs for multi-path routing**

(57) The present method is instrumental in building routing graphs for multi-path routing with an optimised number of nodes that exhibit a minimum number of routing alternatives for routing to a given destination. According to the method the routing graph is built up of primitives which are stepwise added to an incomplete routing graph ($R'_d$). The central primitive consists of a node (u) with a minimum number of outbound links to the incomplete routing graph ($R'_d$). By adding this primitive to the incomplete routing graph ($R'_d$) the node (u) is provided with at least the minimum number of alternative routings to the given destination. Further primitives are presented that complement the central primitive. The invention gives rise to an enhanced network resilience and allows for an improved control of network congestion.

FIG 1

**Description**

The invention relates to a method to be used in building a routing graph for multi-path routing.

Recent developments in network technology aim at enhancing data networks for the transmission of real-time traffic, such as voice, audio or video traffic. A common starting point for these developments is packet-based networks, e.g. networks based on the Internet Protocol (IP networks). A typical IP network consists of routers that are connected via some physical connections (e.g. copper-based or fiber-based) or, possibly, via wireless connections (e.g. based on radio waves). In a more abstract notification, the term node is used to denote functions of a router or a switch. One of the terms link or edge is commonly used for denoting a connection between nodes.

Packet-switched networks employ routing tables or forwarding tables in the nodes to route packets or traffic to their respective destinations. Routing tables specify the next hop, i.e. the next node the packet is to be sent or forwarded to, as a function of the destination address, which is usually included in the packet's header. This concept is often termed "destination based routing".

Destination based routing is successfully employed in data networks, where a "best effort" routing (i. e. no guaranteed performance) usually will do. Examples for protocols used for this approach are the OSPF (open shortest path first) and the IS-IS (intermediate system - intermediate system) protocols. To improve or enhance data networks for real-time traffic it is essential to develop mechanisms or concepts that provide for guaranteed performance with respect to performance features such as latency, availability, reliability etc.

Networks that conform with these requirements are often called carrier-grade networks. Another important feature of carrier-grade networks is the capability to compensate for network failures. In technical literature this feature is called resilience.

A promising approach to improve network resilience and to remedy network congestion caused by traffic overload resorts to multi-path routing. The idea is to provide alternative paths within a communication network to any given destination, so that network congestion or failures can be counteracted by rerouting traffic over alternative paths.

The present invention's objective is to present a method that is instrumental in setting up routing paths and in establishing routing tables for multi-path routing.

The invention relies on the idea that a scheme for routing traffic within a network to a given destination can be constructed in a stepwise way. Within the concept of the invention an incomplete routing graph is assumed to be given. Such an incomplete routing graph generally consists of nodes and links that define paths from the individual nodes to a destination node (e.g. an egress node of a network). Stated differently, an incomplete routing graph consists of individual paths leading from nodes of the incomplete routing graph to the destination node. This incomplete routing graph is to be considered incomplete in the sense that there is at least one node not included in the incomplete routing graph for which a path to the destination node has to be specified (e.g. by identifying a next hop for packets to be sent to the destination node). The term routing graph will be used for a complete routing graph, i.e. a graph that includes all nodes of the networks that are meant to forward traffic to the destination node (in the majority of cases a complete routing graph will comprise all nodes of a network). Routing graphs may be determined or computed for all relevant destinations.

The invention proposes to add nodes and links to a incomplete path in a way to provide for alternative paths. A target value or minimum number greater than one for the number of outbound links (the terms outgoing links and output links are also common) is specified. Preferably, this target value is two. The number of outbound links should not be smaller (but possibly may be greater) than the target value. According to the present method a list of nodes not included in the incomplete graph is established. Within this list a node is identified whose number of outbound links to nodes contained in the incomplete graph is equal or greater than the target value. This node and at least a number corresponding to the target value of its outbound links to nodes in the incomplete graph as are included in the incomplete graph. It is possible to include all outbound links to nodes in the incomplete graph or to restrict the number of included outbound links to the target value.

Using the above method in constructing or building routing graphs for multi-path routing optimises the number of nodes with alternative outbound links leading to a given destination. The number of alternative outbound links can be chosen via the target value. A suitable choice is to have at least two alternative paths. The number of alternative outbound links can optionally be limited to the target value, e.g. by providing for no more than two alternative outbound links. The provision of alternative outbound links to a destination improves the resilience and congestion control of the network.

The list of nodes not included in the incomplete graph generally contains all nodes adjacent to the incomplete routing graph, i.e. those nodes that may be directly connected to a node of the incomplete graph.

There may be situations where the topology of a network does not allow for adding a node with the specified number of links to nodes comprised by the incomplete graph. For instance, such a situation is given if the incomplete graph consists of the destination node only. According to an embodiment of the invention, two mutually adjacent and connected nodes each of which has an outbound link to nodes of the incomplete graph are added in this case. In the present description, a first node is called adjacent to a second node if there is a physical connection that allows for providing a (logical) link from the first node to the second node. Mutually adjacent nodes are adjacent to each other. A node not contained in an incomplete routing graph is called adjacent to the incomplete routing graph if the node is adjacent to a node of the incomplete routing graph. Together with the two mutually adjacent nodes a link or two links with opposite directions connecting the adjacent nodes are added to the incomplete graph.

Preferably, the outbound links lead to different nodes of the incomplete graph. It is possible to check first whether there are two mutually adjacent nodes in the list with outbound links to different nodes of the incomplete graph and to add two mutually adjacent nodes with outbound links leading to the same node only if there are none with outbound links leading to different nodes of the incomplete graph.

The rationale of adding two mutually adjacent nodes is to provide for an alternative route in case one of the outbound links fails by rerouting the traffic of the affected node to the adjacent node, which has a outbound link for routing traffic via the routing graph to the destination.

The present method may be modified to provide for situations where it is neither possible to add a node with two outbound links to the incomplete graph nor to add two mutually adjacent nodes each with an outbound link to the incomplete graph. In this case a node with only one outbound link to the incomplete graph may be added.

The list of nodes to be added to the incomplete routing graph may be ordered according to the distance of the nodes to the destination. Distance is suitably defined to be the minimum number of hops to the destination.

Further embodiments of the invention are presented in the claims.

Below an embodiment of the invention is presented, where the invention is described in more detail with reference to figures.

Fig.1 shows an O2+ routing primitive

Fig.2 shows a joker routing primitive

Fig.3 shows a S0 routing primitive

Fig.4 shows an 01 routing primitive

To allow for a more rigorous description of the embodiment some definitions are given below.

A network is modeled as a directed *graph,* N = (V, E), where V is a finite set whose elements are called nodes, and E is a finite set whose elements are called edges or links. The number of nodes in graph N is denoted as |V|, the number of edges as |E|. Each link $1 \in$ E is defined by an ordered pair (u, v) of nodes, where u is a tail node and v is the head node. It may be assumed that $u \neq v$, for any edge (u, v) $\in$ E and all links of the network are bi-directional, so if (u, v) $\in$ E then also edge (v, u) $\in$ E.

If there is a path from node u to node v in N, then v is reachable from u in graph N, denoted as $u \rightarrow_N v$.

A *routing graph* $R_d$ = (V, E') with E' c E for destination d is a spanning subgraph of N so that

$$\forall u \in V : u \rightarrow_R d.$$

An *incomplete routing graph* $R'_d$ = (V', E') with V' $\subseteq$ V and E' c E for destination d is a subgraph of $R_d$ so that

$$\forall u \in V' : u \rightarrow_{R'} d.$$

In other words, $R'_d$ is the routing graph $R_d$ in the process of computation.

The *distance* $\delta_N(u, R'_d)$ = k with k $\in N_0$ between the node u and the graph $R'_d$ is the number of edges of the shortest path by which one of nodes $R'_d$ is reachable from u in graph N.

The *ring around* the *routing graph* $R'_d$ is a set of all nodes V'' ⊂ V with distance 1 to the routing graph $R'_d$.

The out degree $\omega_R(u)$ of node u is the number of outgoing edges leaving node u in graph R.

A *separation node* (S0 node) v in a connected graph $R_d$ = (V, E') is a node v $\in$ V whose removal disconnects the graph.

A *joker link (or joker)* in the graph $R_d$ = (V, E') is a link for which (u,v) $\in$ E' and (v,u) $\in$ E'. It is denoted as uv.

The goal of the method presented below is to compute a routing graph $R_d$ = (V, E') for every destination d in a graph N = (V, E) with following properties:

1. $\forall u \in V : u \rightarrow_R d$.
The destination must be reachable by all nodes.

2. $\forall u \in V-\{d\} : \omega_R(u) \geq 2$.
Each node except the destination must have at least two outgoing edges.

3. $\forall u \in V-\{d\} \forall v \in V-\{u,d\} : v \rightarrow_{R-u} d$.
If any node except the destination is removed, the destination is still reachable by the remaining nodes.
In other words, $R_d$ does not contain a separation node.

4. $\forall u \in V-\{d\} \exists v \in V : (u,v) \in$ E' and (v,u) $\notin$ E'.
Each node except the destination must have at least one outgoing edge, which is not a joker link.

5. $u \rightarrow_R v$ and $v \rightarrow_R u \Rightarrow uv \in$ E'.
If two nodes u and v are mutually reachable in R, then they are neighbors, and the link between them is a joker link, i.e. joker links do not create multi-hop loops. It means that R does not contain cycles with length 3 and higher.

Such routing graph $R_d$ is called an O2-routing graph.

For some topologies of the network it is not possible to construct the routing graph $R_d$ with out degree $\omega_R(u) \geq 2$ for all nodes and without separation nodes. In this constellation the method aims to minimize:

- the number of nodes with out degree $\omega_R(u) = 1$;
- the number of S0 nodes;
- the number of jokers;
- the length of paths towards the destination.

The method constructs the routing graph $R_d$ from elements called routing graph primitives. A routing graph primitive is a small subgraph containing at least one node with one output link, which can be used as a basic element in the process of construction of $R_d$. We define four main types of routing primitives.

Any O2 routing graph can be presented as a set of following primitives:

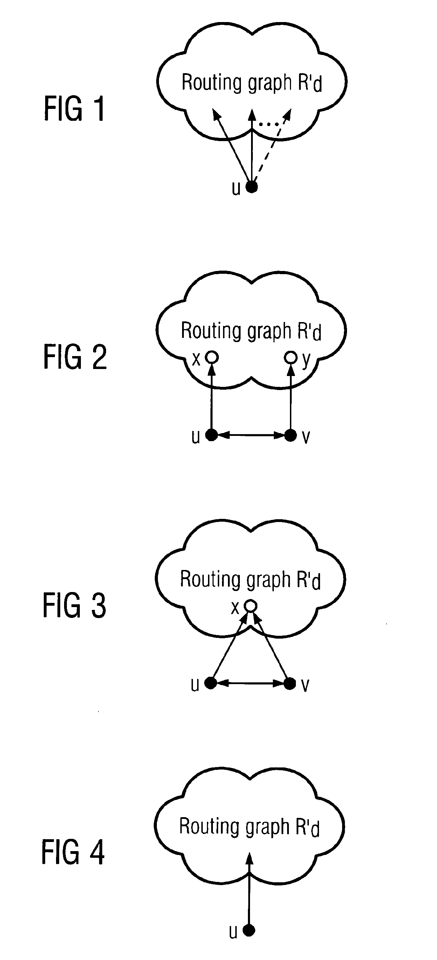

1. An O2+ routing primitive (Fig. 1) is a node $u \in V$ with 2 or more output links to the incomplete routing graph $R'_d$ (see Figure 1). If the directed graph $R'_d$ is an O2 graph without S0 nodes and loops, then after an addition of an O2+ routing primitive, it is an O2 graph without S0 nodes and loops as before.

2. A joker routing primitive (Fig. 2) consists of two nodes u and v connected together by a joker uv and connected with the incomplete routing graph $R'_d$ by edges (u, x) and (v, y) accordingly, where $x \neq y$. Figure 2 illustrates the situation.
If a directed graph $R'_d$ is an O2 graph without S0 nodes and loops, then after an addition of a joker routing primitive, it is O2 graph without S0 nodes and loops but with one more joker.

3. A S0 routing primitive (Fig. 3) consists of two nodes u and v connected together by a joker uv and connected with the incomplete routing graph $R'_d$ by edges (u, x) and (v, x) accordingly (see Figure 3). An S0 routing primitive does not contain an S0 node itself, but an addition of a S0 routing primitive in a routing graph signifies a formation of an S0 node (see node x in Figure 3) in the routing graph.
So, if a directed graph $R'_d$ is an O2 graph without S0 nodes and loops, then after an addition of a S0 routing primitive, it is a graph without O1 nodes and loops but with one S0 node and with one more joker.

Any routing graph can be presented by a combination of previous three components and the following:

4. An O1 routing primitive (Fig. 4) is a node connected by only one output link with the incomplete routing graph $R'_d$.
If a directed graph $R'_d$ is an O2 graph without loops, then after an addition of an O1 routing primitive, it is a graph without loops but with one O1 node.

Using the routing primitives detailed above a routing graph can be computed as follows:

At the beginning the incomplete routing graph $R'_d$ contains only the destination d. While $R'_d$ contains not all nodes from V, the method is looking for a routing graph primitive from the ring around the incomplete routing graph $R'_d$ and adds it in $R'_d$. The incomplete routing graph $R'_d$ changes after each step of the method. Therefore the ring around the graph $R'_d$ changes, too.

At the first step the method can add only a S0 routing primitive or an O1 routing primitive. It depends on the topology of the network. If it is not possible to add a S0 routing primitive at the first step, then the network is not O2 capable. Since the method attempts to construct an O2 routing graph, it aims to use a S0 routing primitive at the first step. If an O1 routing primitive is used then the routing graph (and network) is not O2 capable.

At all following steps the method aims to use O2+ routing primitives; when it is not possible, it uses a joker routing primitive, a S0 routing primitive or an O1 routing primitive (in preferable order).

The method performs the following steps for each destination d:

1) Create a list $L_{all}$ with all nodes from the graph N ordered by the distance to the destination d.

2) Create a new list $L_{ring}$ with all nodes from the ring around the incomplete routing graph $R'_d$ ordered as in the list $L_{all}$ (by the distance to the destination d).

3) If the list $L_{ring}$ is empty then return $R'_d$ as a routing graph towards destination d.

4) Try to add an O2+ routing primitive with a node from the list $L_{ring}$ (see Figure 1) in $R'_d$. If the primitive was added then repeat steps 2 - 7.

5) Try to add a joker routing primitive (see Figure 2) with nodes from the list $L_{ring}$ in $R'_d$. If the primitive was added then repeat steps 2 - 7.

6) Try to add a S0 routing primitive (see Figure 3) with nodes from the list $L_{ring}$ in $R'_d$. If the primitive was added then repeat steps 2 - 7.

7) Add an O1 routing primitive (see Figure 4) with a node from the list in $R'_d$. Repeat steps 2 - 7.

8) (The optional step) if the method aims to provide the out degree $\omega_R(u)$ strictly equal 2 for all nodes except the destination then for all nodes with $\omega_R(u)$ > 2 it removes redundant output links. At that it aims to minimize the length of paths towards the destination.

## Claims

1. A method to be used in building a routing graph ($R_d$) for multi-path routing, comprising the steps of

   - specifying a minimum number greater than one for the number of alternative routings to a destination,
   - creating a list of nodes not included in an incomplete routing graph ($R'_d$),
   - identifying a node (u) in the list with at least the minimum number of outbound links employable for connecting the node (u) to the incomplete routing graph ($R'_d$), and
   - adding the node (u) and at least a number equal to the minimum number of outbound links to the incomplete routing graph ($R'_d$).

2. The method according to claim 1, further comprising

   - identifying two mutually adjacent nodes (u,v) in the list with one outbound link each for connecting the respective node to the incomplete routing graph ($R'_d$), and
   - adding the two nodes (u,v), the outbound links and a link connecting the two nodes (u,v) to each other to the incomplete routing graph ($R'_d$).

3. The method according to claim 2, wherein the steps according to claim 2 are performed when no node in the list with the minimum number of outbound links for connecting the node to the incomplete routing graph ($R'_d$) was found.

4. The method according to one of claims 2 or 3, further comprising

   - identifying two mutually adjacent nodes (u,v) in the list with at least one outbound link each for connecting the respective node to different nodes of the incomplete routing graph ($R'_d$) if such two nodes are to be found in the list, and
   - identifying two mutually adjacent nodes (u,v) in the list with one outbound link each for connecting the respective node to the same node (x) of the incomplete routing graph ($R'_d$) otherwise.

5. The method according to one of the preceding claims, further comprising

   - identifying a node (u) in the list with one outbound link for connecting the node (u) to the incomplete routing graph ($R'_d$), and
   - adding the node (u) and the outbound link to the incomplete routing graph ($R'_d$).

6. The method according to claim 5, wherein the node (u) in the list with one outbound link is identified and added, when no node in the list according to claim 1, claim 2 or claim 4 is found.

7. The method according to one of the preceding claims, further including ordering and searching the list of nodes not included in the incomplete routing graph ($R'_d$) according to the distance of the nodes to the destination.

8. The method according to one of the preceding claims, comprising the steps of

   1) creating a list of nodes adjacent to the incomplete routing graph ($R'_d$),
   2) searching the list for a node (u) with the minimum number of outbound links for connecting the node to the incomplete routing graph ($R'_d$), and, if a node (u) is found, adding the node and at least the minimum number of outbound links to the incomplete routing graph ($R'_d$) and continuing with step 1),
   3) searching the list for two mutually adjacent nodes (u,v) with one outbound link each for connecting the respective node to the incomplete routing graph ($R'_d$), and, if such nodes are found, adding the two nodes (u,v) and at least the outbound links to the incomplete routing graph ($R'_d$) and continuing with step 1), and
   4) searching the list for a node (u) with one outbound link for connecting the node (u) to the incomplete routing graph ($R'_d$), and, if such a node is found, adding the node (u) and the outbound link to the incomplete routing graph ($R'_d$) and continuing with step 1).

FIG 1

Routing graph R'd

u

FIG 2

Routing graph R'd

x      y

u      v

FIG 3

Routing graph R'd

x

u      v

FIG 4

Routing graph R'd

u

**European Patent Office**

## EUROPEAN SEARCH REPORT

Application Number

EP 04 01 1420

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | SCHOLLMEIER, G.; CHARZINSKI, J.; KIRSTADTER, A.; REICHERT, C.; SCHRODI, K.J.; GLICKMAN, Y.; WINKLER, C.: "Improving the resilience in IP networks" IEEE HIGH PERFORMANCE SWITCHING AND ROUTING, 2003, HPSR. WORKSHOP ON, 24 June 2003 (2003-06-24), - 27 June 2003 (2003-06-27) pages 91-96, XP002302291 * page 92, right-hand column, line 19 - line 27 * * page 93, right-hand column * * page 94, line 15 - line 24 * ----- | 1-8 | H04L12/56 |
| | | | **TECHNICAL FIELDS SEARCHED** (Int.Cl.7) |
| | | | H04L |

The present search report has been drawn up for all claims

| Place of search | Date of completion of the search | Examiner |
|---|---|---|
| Berlin | 25 October 2004 | Siebel, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)